# EUROPÄISCHE PATENTSCHRIFT

(11) **EP 2 761 034 B1**
(45) Veröffentlichungstag und Bekanntmachung des Hinweises auf die Patenterteilung: **06.12.2017**
(21) Anmeldenummer: 12729980.8
(22) Anmeldetag: 26.06.2012
(51) Int. Cl.: B32B 5/02, B32B 7/12, B32B 9/04, B32B 37/12, B32B 37/24, C14B 7/02, C14B 7/04, C14C 11/00, B32B 9/02

(54) **LEDER MIT TEXTIL/VLIESSCHICHT AUF DER NARBENSEITE**
LEATHER WITH TEXTILE/NONWOVEN LAYER ON THE GRAIN SIDE
CUIR AVEC COUCHE TEXTILE/NON TISSÉE SUR LE CÔTÉ FLEUR

(30) Priorität: 28.09.2011 AT 14032011
(43) Veröffentlichungstag der Anmeldung: 06.08.2014
(73) Patentinhaber: Wollsdorf Leder Schmidt & Co. Ges.m.b.H., 8181 Wollsdorf (AT)
(72) Erfinder: ACKERMANN, Gregor, A-8605 Parschlug (AT); KINDERMANN, Andreas, A-2531 Gaaden (AT); ZOTTLER, Manuel, A-8162 Passail (AT)
(74) Vertreter: Schwarz & Partner Patentanwälte OG
(86) Internationale Anmeldenummer: PCT/EP2012/062382
(87) Internationale Veröffentlichungsnummer: WO 2013/045124

(56) Entgegenhaltungen:
- EP-A2- 0 178 294
- WO-A1-2005/047549
- DE-U1- 20 313 449
- DE-U1- 20 317 423
- DE-U1-202010 012 148
- FR-A1- 2 939 731

## Beschreibung

Die Erfindung betrifft ein Verfahren zur Herstellung von Leder mit einer Textil/Vliesschicht und ein Leder mit einer Textil/Vliesschicht.

Das Dokument EP 0 331 214 A2 offenbart ein Verfahren zum Verarbeiten von Spaltleder, wobei vorerst auf den Unterschied zwischen Spaltleder und Nabenspalt eingegangen ist. Die Häute von zum Beispiel Rindern sind 5 bis 10 Millimeter dick, sodass man mehrere Schichten durch Spalten gewinnen kann, das Spaltleder. Die untere Schicht ist billiger, hat aber auch den geringsten inneren Zusammenhalt, da die Dichte und Verfilzung Eiweißfasern, aus denen Leder besteht, nach unten (zur Fleischseite hin) abnimmt. Die höchste Festigkeit hat der sog. Nabenspalt - die oberste Schicht, die die glatte Leder-Oberseite - die Narbenseite - enthält.

Mit dem bekannten Verfahren zum Verarbeiten von Spaltleder wird trotz Verwendung des kostengünstigeren Spaltleder versucht dem zugerichteten Leder das Aussehen und die Eigenschaften eines vollnabigen Naturleders zu verleihen. Bei der Herstellung wird auf einem Papierträger mit negativer Nabenstruktur mit einer Streichvorrichtung eine hochviskose Polyurethanlösung aufgebracht, die zu einem Film trocknet. Auf einer Seite des Spaltleders wird eine wässrige Dispersionsschicht aufgebracht. Anschließend wird das Spaltleder mit dieser Seite mit der Dispersionsschicht auf den Papierträger mit dem Film aufgelegt und unter Druck und Temperatur zu einem zugerichteten Spaltleder verbunden. Anschließend wird der Papierträger abgezogen, worauf durch die der Nabenstruktur eines Naturleders ähnliche Prägung des Papierträgers, die sich im Film abgedrückt hat, der Eindruck der Narbenseite eines Leders entsteht.

In dem Dokument ist weiters offenbart, in einer der beiden Schichten des zugerichteten Spaltleders eine Textilschicht als Verstärkungslage anzuordnen, um das eine geringe mechanische Reißfestigkeit aufweisende Spaltleder mechanisch zu verstärken. Es werden keine nähren Angaben zu der Textilschicht gemacht, wobei angeführt ist, dass das Flächengewicht unter 80 g/m² liegen soll.

Das bekannte zugerichtete Spaltleder hat sich durch seinen zumindest vierschichtigen Aufbau (Spaltleder/wässrige Dispersion/Textilschicht/Film) bei der Herstellung als kostspielig ergeben. Weiters wird mit der Prägung des Films zwar der Eindruck der Narbenseite eines Leders nachempfunden, aber hierdurch kann weder der optische und haptische Eindruck einer echten Narbenseite erreicht werden, noch werden ausreichend gute mechanische Eigenschaften erzielt.

Das Dokument DE 203 17 423 U1 offenbart ein Leder, auf dessen geschliffener Narbenseite eine besonders dünne Textil/Vliesschicht aufgebracht ist. Die einzelnen Fasern der Textil/Vliesschicht liegen zur Gänze in den Zwischenräumen der Lederfaserbüschel der Narbenseite. Hierdurch entsteht der Nachteil, dass das Leder durch das Schleifen der Narbenseite mechanisch geschwächt wird und die einzelnen Fasern der Textil/Vliesschicht Vertiefungen und Überhöhungen durch Hautschädigungen der Narbenseite nicht ausgleichen können.

Das Dokument DE 203 13 449 U1 offenbart ein Leder, und zwar Narbenleder, dass an seiner Narbenseite vorzugsweise mit einer Zurichtung versehen ist, oder Spaltleder, dass an seiner Spaltseite mit einer Zurichtung versehen ist, wobei an der der Narbenseite bzw. Spaltseite gegenüberliegenden Fleischseite eine aus Kunststoff bestehende Schaumschicht angeordnet ist.

Das Dokument WO 2005/047549 A1 offenbart ein Narbenleder, welches an seiner Sichtseite mit einer eine Narbenstruktur aufweisenden Zurichtung versehen ist.

Der Erfindung liegt die Aufgabe zugrunde ein Verfahren zur Herstellung von Leder und ein Leder mit Textil/Vliesschicht zu erlangen, bei dem die vorstehenden Nachteile vermieden sind.

Erfindungsgemäß wird diese Aufgabestellung dadurch gelöst, dass bei der Herstellung des Leders folgende Verfahrensschritte durchgeführt werden:
Herstellung einer eine Narbenseite aufweisende Lederschicht aus einer Tierhaut;
Aufbringen und insbesondere aufkleben der Textil/Vliesschicht auf der Narbenseite der Lederschicht;
Aufsprühen einer die Textil/Vliesschicht gegebenenfalls teilweise durchdringenden Zurichtung auf die Textil/Vliesschicht;
wobei bei einer geringeren Qualität der Narbenseite ein höheres Flächengewicht der Textil/Vliesschicht gewählt wird.

Diese Aufgabenstellung wird bei einem Leder mit Textil/Vliesschicht durch folgenden Schichtaufbau gelöst:
Lederschicht mit einer Narbenseite;
auf der Narbenseite aufgebrachte und insbesondere aufgeklebte Textil/Vliesschicht;
auf die Textil/Vliesschicht aufgebrachte Zurichtung, die die Textil/Vliesschicht gegebenenfalls teilweise durchdringt, wobei bei einer geringeren Qualität der Narbenseite die Textil/Vliesschicht ein höheres Flächengewicht aufweist.

Durch die Verwendung des Narbenspalts bzw. der Narbenseite wird einerseits unmittelbar eine gute mechanische Festigkeit und andererseits der gewünschte optische und haptische Eindruck von Leder erzielt. Die unmittelbar auf der Narbenseite aufgeklebte Textilschicht und/oder Vliesschicht bildet eine besonders feste Haftung mit dem Leder und ermöglicht eine Verankerung der Zurichtung mit der Textil/Vliesschicht und dem Leder. Das erfindungsgemäße Leder zeichnet sich somit durch besondere Reißfestigkeit und einen edlen und qualitativ hochwertigen Eindruck aus.

Das Flächengewicht der Textil/Vliesschicht wird vorteilhafterweise geringer als 40g/m² und abhängig von der Qualität der Narbenseite und der gewünschten Reißfestigkeit gewählt. Bei Qualitätsfehlern der Narbenseite kann die Textil/Vliesschicht somit mit einem höheren Flächengewicht gewählt werden, um einen gleichmäßigeren optischen Eindruck zu erwecken. Als besonders vorteilhaft hat sich erwiesen die Textil/Vliesschicht funktional zu nutzen. So können beispielsweise in die Textilschicht und/oder Vliesschicht eingewobene Heizdrähte bei Verwendung des Leders für einen Autositz als Sitzheizung eingesetzt werden. Bei einer herkömmlichen Sitzheizung sind Heizdrähte in der Polsterung des Sitzes unter dem Leder angeordnet. Von den Heizdrähten einer solchen Sitzheizung abgegebene Wärme muss allerdings erst durch das thermisch isolierende Leder diffundieren, um den auf dem Sitz sitzenden Benutzer zu wärmen. Ein guter Teil der abgegebenen Wärme diffundiert allerdings nur in die Polsterung des Sitzes und geht somit verloren. Bei einem mit dem erfindungsgemäßen Leder ausgestatteten Sitz mit Heizdrähten ist der Vorteil gegeben, dass die Textil/Vliesschicht mit den Heizdrähten auf der Benutzerseite des Leders vorgesehen ist und die erzeugte Wärme somit unmittelbar an den Benutzer abgegeben wird. Hierdurch können sowohl Kosten bei der Herstellung eines Autositzes mit Sitzheizung als auch Energiekosten gespart werden.

Eine weitere Anwendung die Textil/Vliesschicht funktional zu nutzen wäre es den Flammschutz des Leders mit der Textil/Vliesschicht zu verbessern. Herbei hat sich als vorteilhaft erwiesen ein flammhemmendes Material für die Textil/Vliesschicht zu verwenden und in die Textil/Vliesschicht eine Zurichtung einzubinden, die ebenfalls flammhemmende Eigenschaften aufweist.

Weitere vorteilhafte Ausgestaltungen des erfindungsgemäßen Systems werden im Folgenden anhand der Figuren näher erläutert.
Figur 1 zeigt den Schichtaufbau eines Leders mit Textilschicht.
Figur 2 zeigt ein Verfahren zur Herstellung des Leders gemäß Figur 1.

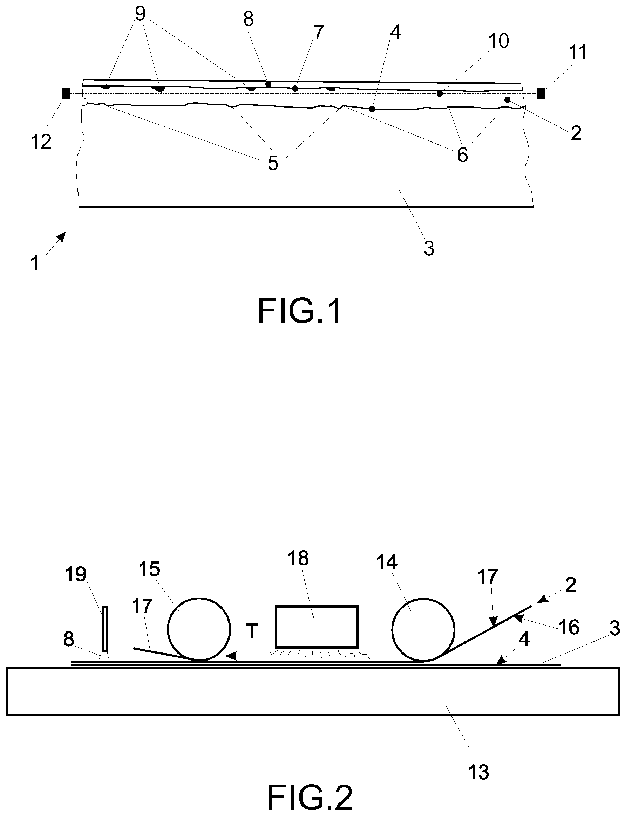

Figur 1 zeigt ein Leder 1 mit einer Textilschicht 2, welches Leder 1 beispielsweise zum Beledern von Fahrzeugrauminnenteilen, aber auch für andere Einsatzgebiete verwendbar ist. Das Leder 1 weist eine Lederschicht 3 auf, die aus einer Tierhaut hergestellt wurde und die die qualitativ hochwertige Narbenseite 4 der Tierhaut aufweist. Die Lederschicht 3 wurde aus der obersten Schicht der Lederhaut gewonnen und zeichnet sich durch eine hohe Dichte und Verfilzung der Eiweißfasern aus, weshalb die Lederschicht 3 eine besondere mechanische Festigkeit aufweist.

Die Narbenseite 4 weist die typische vom Benutzer gewünschte Strukturierung einer Lederoberfläche auf, wobei in qualitativ schlechteren Bereichen des Leders 1 Narben oder andere Hautschädigungen unerwünscht große Vertiefungen 5 oder Überhöhungen 6 hinterlassen haben. Auf der Narbenseite 4 der Lederschicht 3 ist die Textilschicht 2 mit einem thermisch aktivierbaren Kleber aufgeklebt vorgesehen. Als Textilschicht 2 haben sich insbesondere folgenden Faserarten als vorteilhaft erwiesen: Gewebe, Gewirke, Filz aus Kunstfaser, insbesondere Polyamid oder Polyester, Naturfaser, insbesondere Baumwolle oder Wolle, Kohlefasermaterial, insbesondere Aramidfaser. Die Textilschicht 2 erfüllt mehrere Funktionen. Vorerst einmal hat die Textilschicht 2 die Funktion übermäßig große Vertiefungen 5 oder Überhöhungen 6 auszugleichen. Die Dicke der Textilschicht bzw. das Flächengewicht der Textilschicht 2 wird umso dicker bzw. schwerer gewählt, umso größer die Hautschädigungen sind. Durch diese ausgleichende Funktion der Textilschicht ist ihre Oberfläche 7 wesentlich ruhiger bzw. glatter als die Oberfläche der Narbenseite 4.

Auf der Textilschicht 2 ist eine sogenannte Zurichtung 8 aufgesprüht worden und als dünner Film bestehen geblieben. Als Zurichtung 8 kennt der Fachmann das Auftragen durch Aufstreichen bzw. Aufsprühen mehrer Schichten die Pigmente enthalten (Grundierung und Deckschichten) sowie einer oder mehrer abschließender Lackschichten. Die Inhaltsstoffe sind unter anderem Pigmente, Acrylate, Bindemittel vorwiegend aus Polyurethanen Wachse und Silikone.

Durch das Aufsprühen der Zurichtung 8 wird die Zurichtung 8 auf die Textilschicht 2 aufgebracht. Je nach Struktur der Textilschicht 2 und Fließfähigkeit der Zurichtung 8 nach dem Aufsprühen dringt die Zurichtung 8 an einzelnen Stellen 9 auch in die Textilschicht 2 und gegebenenfalls sogar bis zur Narbenseite 4 ein.

Durch das Aufkleben der Textilschicht 2 und das Aufsprühen der Zurichtung 8 auf die Textilschicht 2 ist eine besonders gute Verankerung der Zurichtung 8 auf der Lederschicht 3 gegeben, weshalb das Leder 1 besonders haltbar ist. Die Textilschicht 2 erfüllt somit auch die Funktion eine verbesserte Haltbarkeit des Leders 1 zu ermöglichen. Zusätzlich verteilt die Textilschicht 2 Zugspannungen und Druck auf größere Bereiche, was ebenfalls zur längeren Haltbarkeit des Leders 1 beiträgt.

Die Textilschicht 2 des Leders 1 erfüllt nunmehr weiters die Funktion, dass nur mit dem Leder 1 eine Heizung bzw. Sitzheizung realisiert werden kann. In der Textilschicht sind nämlich eine große Anzahl an feinen Heizdrähten 10 mit eingewoben, die an ihren Enden mit Kontakten 11 und 12 verbunden sind. Die Heizdrähte können ein engmaschiges Geflecht bilden oder auch schichtförmig ausgebildet sein. Wenn das Leder 1 beispielsweise zur Belederung von Autositzen oder Kinositzen verwendet wird, dann ist zur Realisierung einer Sitzheizung nur eine Niederspannungs-Energiequelle nötig, die über einen ON/OFF-Schalter an die Kontakte 11 und 12 angeschlossen wird. Besonders vorteilhaft an dieser Sitzheizung ist, dass die von den Heizdrähten 10 erzeugte Wärme durch die thermische Isolation der Lederschicht 3 praktisch zur Gänze über die Zurichtung 8 an den Benutzer des Sitzes abgegeben wird. Hierdurch wird die Energie besonders effektiv genützt.

Die Textilschicht kann als weitere Funktion flammhemmende Eigenschaften aufweisen. Hierfür besteht sie aus schwer oder nicht brennbarem Material. Zusätzlich kann die Zurichtung flammhemmende Eigenschaften aufweisen. Hierdurch ist der Vorteil erhalten, dass die Brandgefahr in Autos oder Flugzeugen wesentlich reduziert werden kann.

In Figur 2 ist nunmehr noch ein Beispiel eines Verfahrens zur Herstellung des Leders 1 gemäß Figur 1 dargestellt. Als erster Verfahrensschritt wird aus einer Tierhaut die Lederschicht 3 hergestellt, die die Narbenseite 4 aufweist, wobei dieser Verfahrensschritt für sich genommen aus dem Stand der Technik bekannt ist. Als zweiter Verfahrensschritt wird die Textilschicht 2 auf der Narbenseite 4 aufgeklebt. Hierfür wird die Lederschicht 3 mit ihrer Narbenseite 4 nach oben auf einem Förderband 13 aufgelegt. Zwei Anpressrollen 14 und 15 drehen sich entsprechend der Fördergeschwindigkeit des Förderbandes. Bei der Anpressrolle 14 wird die Textilschicht 2 an die Narbenseite 4 herangeführt, wobei auf der der Narbenseite 4 zugewandten Seite der Textilschicht 2 ein thermisch aktivierbarer Kleber 16 aufgebracht ist und auf der der Narbenseite 4 abgewandten Seite der Textilschicht 4 eine Papierschicht 17 vorgesehen ist.

Mit der Temperatur T eines Heizelements 18 werden die Textilschicht 2 und der Kleber 16 aufgeheizt und mit der Anpressrolle 15 an die Lederschicht 3 angedrückt. Hierbei schützt die Papierschicht 17 die Textilschicht 2 vor Beschädigungen. Nach der Anpressrolle 15 wird die Papierschicht 17 von der Textilschicht 2 abgehoben. Bei einem dritten Verfahrensschritt wird von einer Sprühdüse 19 die Zurichtung 8 aufgesprüht, wobei die Zurichtung 8 teilweise in die Textilschicht 2 eindringt.

Dieses Verfahren zur Herstellung des Leders 1 ist besonders einfach und zuverlässig durchführbar. Hierdurch ergeben sich nur geringe Herstellungskosten, wobei gleichzeitig durch die Verwendung des Nabenspalts und der Textilschicht ein qualitativ besonders hochwertiges Leder erhalten wird.

Es kann erwähnt werden, dass in der Textilschicht auch ein Geflecht elektrisch leitender Drähte vorgesehen sein könnte, um elektromagnetische Strahlungen bzw. Elektrosmog abzuleiten. Hierfür müsste das Geflecht nur einen Kontakt aufweisen, der mit einer Erdung oder mit Masse verbunden werden würde.

Es kann erwähnt werden, dass der Kleber 16 zum Festkleben der Textilschicht 2 auf der Lederschicht 3 auch auf der Narbenseite 4 aufgetragen werden könnte.

Es kann erwähnt werden, dass die Textilschicht dicker mit beispielsweise einem Flächengewicht von 20g/m² gewählt werden kann, wenn die Oberfläche des Leders 1 eine Prägung aufweisen soll.

Die Textilschicht kann als weitere Funktion statische Aufladungen beispielsweise im Bereich von Elektronik (Unterhaltungselektronik, elektrische Geräte) vermeiden. In die Textil/Vliesschicht könnte eine für elektrostatische Ladungen leitfähige Schicht eingearbeitet sein, die gegebenenfalls über einen Kontakt geerdet werden könnte, aber nicht muss. Solches Leder könnte auch für Verkleidungsteile von Elektronik (z.B. Handycover) verwendet werden und erfüllt somit eine "antistatic" Funktion. Damit wird das Raumklima verbessert und die Geräte vor unbeabsichtigtem Entladen geschützt.

Es kann erwähnt werden, dass der Fachmann unter dem Begriff Vlies ein textiles Flächengebilde aus einzelnen Fasern versteht. Im Gegensatz dazu werden Gewebe, Gestricke und Gewirke aus Garnen hergestellt. Die erfindungsgemäße Textil/Vliesschicht kann somit entweder aus einem Textil oder einem Vlies oder aus einer Kombination der beiden Arten bestehen.

## Patentansprüche

1. Verfahren zur Herstellung von Leder (1) mit einer Textil/Vliesschicht wobei folgende Verfahrensschritte durchgeführt werden:
Herstellung einer eine Narbenseite (4) aufweisende Lederschicht (3) aus einer Tierhaut;
Aufbringen und insbesondere aufkleben der Textil/Vliesschicht (2) auf der Narbenseite (4) der Lederschicht (3);
Aufsprühen einer die Textil/Vliesschicht (2) gegebenenfalls teilweise durchdringenden Zurichtung (8) auf die Textil/Vliesschicht (2), wobei bei einer geringeren Qualität der Narbenseite (4) ein höheres Flächengewicht der Textil/Vliesschicht (2) gewählt wird.

2. Verfahren gemäß Anspruch 1, **dadurch gekennzeichnet, dass** die Textil/Vliesschicht (2) mit einem thermisch aktivierbaren Kleber (16) auf der Narbenseite (4) der Lederschicht (3) aufgebracht wird, wofür die Textil/Vliesschicht (2) auf der der Narbenseite (4) abgewandten Seite eine Papierschicht (17) zum Schutz der Textil/Vliesschicht (2) beim Aufbringen der den Kleber (16) aktivierenden Hitze aufweist, die nach dem Kleben und vor dem Aufsprühen der Zurichtung (8) von der Textil/Vliesschicht (2) abgezogen wird.

3. Verfahren gemäß einem der vorherigen Ansprüche, **dadurch gekennzeichnet, dass** als Textil/Vliesschicht (2) zumindest eine der folgenden Faserarten verwendet wird: Gewebe, Gewirke, Filz aus Kunstfaser, insbesondere Polyamid oder Polyester, Naturfaser, insbesondere Baumwolle oder Wolle, Kohlefasermaterial, insbesondere Aramidfaser.

4. Verfahren gemäß einem der vorherigen Ansprüche, **dadurch gekennzeichnet, dass** eine Textil/Vliesschicht (2) verwendet wird, die elektrischen Strom leitende Eigenschaften aufweist.

5. Verfahren gemäß einem der vorherigen Ansprüche, **dadurch gekennzeichnet, dass** eine Textil/Vliesschicht (2) und/oder Zurichtung (8) verwendet wird, die flammhemmende Eigenschaften aufweist.

6. Leder (1) mit einer Textil/Vliesschicht (2), wobei das Leder (1) folgenden Schichtaufbau aufweist:
Lederschicht (3) mit einer Narbenseite (4);
auf der Narbenseite (4) aufgebrachte und insbesondere aufgeklebte Textil/Vliesschicht (2);
auf die Textil/Vliesschicht (2) aufgebrachte Zurichtung (8), die die Textil/Vliesschicht (2) gegebenenfalls teilweise durchdringt, **dadurch gekennzeichnet, dass** bei einer geringeren Qualität der Narbenseite (4) die Textil/Vliesschicht (2) mit einem höheren Flächengewicht vorgesehen ist.

7. Leder (1) gemäß Anspruch 6, **dadurch gekennzeichnet, dass** in der Textil/Vliesschicht (2) zumindest eine der folgenden Faserarten verwendet wird: Gewebe, Gewirke, Filz aus Kunstfaser, insbesondere Polyamid oder Polyester, Naturfaser, insbesondere Baumwolle oder Wolle, Kohlefasermaterial, insbesondere Aramidfaser.

8. Leder (1) gemäß einem der vorherigen Ansprüche 6 oder 7 **dadurch gekennzeichnet, dass** die Textil/Vliesschicht (2) elektrischen Strom leitende Eigenschaften aufweist.

9. Leder (1) gemäß Anspruch 8, **dadurch gekennzeichnet, dass** in der Textil/Vliesschicht (2) elektrischen Strom leitende Fäden, insbesondere Heizdrähte (10), eingewoben sind.

10. Leder (1) gemäß Anspruch 9, **dadurch gekennzeichnet, dass** mit den Strom leitenden Fäden verbundene Kontakte (11, 12) vorgesehen sind, an denen Strom, insbesondere zum Aufheizen der Heizdrähte (10), in die Fäden einleitbar ist.

11. Leder (1) gemäß einem der vorherigen Ansprüche 6 bis 10 **dadurch gekennzeichnet, dass** die Textil/Vliesschicht (2) und/oder die Zurichtung (8) flammhemmende Eigenschaften aufweist.

12. Leder (1) gemäß einem der Ansprüche 6 bis 11, **dadurch gekennzeichnet, dass** die Textil/Vliesschicht (2) ein Flächengewicht von weniger als 40g/m² und insbesondere zwischen 6 und 10g/m² aufweist.

13. Sitz, insbesondere Fahrzeugsitz, mit einer Sitzheizung, **dadurch gekennzeichnet, dass** der Sitz mit einem Leder gemäß einem der Patentansprüche 8 bis 10 bezogen ist.

## Claims

1. A method for producing leather (1) having a textile / nonwoven layer,
wherein the following process steps are carried out:
producing a leather layer (3) having a grain side (4) from an animal skin;
applying and, in particular, adhesively bonding the textile / nonwoven layer (2) onto the grain side (4) of the leather layer (3);
spraying on a finishing (8), optionally in part permeating the textile / nonwoven layer (2), onto the textile / nonwoven layer (2), wherein
in the case of a lower quality of the grain side (4), there is chosen a higher weight by unit area of the textile / nonwoven layer (2).

2. A method according to claim 1, **characterized in that** the textile / nonwoven layer (2) is applied onto the grain side (4) of the leather layer (3) by means of a thermally activatable adhesive (16), wherein the textile / nonwoven layer (2) on the side facing away from the grain side (4) has a paper layer (17) for the protection of the textile / nonwoven layer (2) against the heat activating during application of the adhesive (16), which is then pulled off of the textile / nonwoven layer (2) after adhesive bonding and before spraying on the finishing (8).

3. A method according to any of the preceding claims, **characterized in that** there is used as a textile / nonwoven layer (2) at least one of the following fibre types: textile, knitted fabrics, nonwoven made from synthetic fibre, in particular polyamide or polyester, natural fibre, in particular cotton or wool, carbon fibre material, in particular aramid fibre.

4. A method according to any of the preceding claims, **characterized in that** there is used a textile / nonwoven layer (2) having electrically conducting characteristics.

5. A method according to any of the preceding claims, **characterized in that** there is used a textile / nonwoven layer (2) and/or a finishing (8) having flame-retardant characteristics.

6. A leather (1) having a textile / nonwoven layer (2), wherein the leather (1) has the following layer configuration:
leather layer (3) having a grain side (4),
textile / nonwoven layer (2) applied and, in particular, adhesively bonded to the grain side (4);
finishing (8) applied onto the textile / nonwoven layer (2), which optionally in part permeates the textile / nonwoven layer (2), **characterized in that**
in the case of a lower quality of the grain side (4), the textile / nonwoven layer (2) is provided with a higher weight per unit area.

7. A leather (1) according to claim 6, **characterized in that** in the textile / nonwoven layer (2) there is used at least one of the following fibre types: textile, knitted fabrics, nonwoven made from synthetic fibre, in particular polyamide or polyester, natural fibre, in particular cotton or wool, carbon fibre material, in particular aramid fibre.

8. A leather (1) according to any of the preceding claims 6 or 7, **characterized in that** the textile / nonwoven layer (2) has electrically conducting characteristics.

9. A leather (1) according to claim 8, **characterized in that** electrically conducting filaments, in particular heating wires (10), are interwoven into the textile / nonwoven layer (2).

10. A leather (1) according to claim 9, **characterized in that** there are provided contacts (11, 12) connected to the electrically conducting filaments, at which electric power may be introduced into the filaments, in particular for heating the heating wires (10).

11. A leather (1) according to any of the claims 6 to 10, **characterized in that** the textile / nonwoven layer (2) and/or the finishing (8) have flame-retardant characteristics.

12. A leather (1) according to any of the claims 6 to 11, **characterized in that** the textile / nonwoven layer (2) has a weight per unit area of less than 40 g/m² and in particular between 6 and 10 g/m².

13. A seat, in particular a vehicle seat, having a seat heating, **characterized in that** the seat is covered by a leather according to any of the patent claims 8 to 10.

## Revendications

1. Procédé pour la production de cuir (1) avec une couche textile/non-tissé, dans lequel on exécute les étapes de procédé suivantes :
on produit une couche de cuir (3) présentant un côté fleur (4) à partir d'une peau animale ;
on rapporte et en particulier on colle la couche textile/non-tissé (2) sur le côté fleur (4) de la couche de cuir (3) ;
on pulvérise, sur la couche textile/non-tissé (2), un parage (8) qui traverse le cas échéant partiellement la couche textile/non-tissé (2), dans lequel pour une qualité plus faible du côté fleur (4) on sélectionne un poids surfacique plus élevé pour la couche textile/non-tissé (2).

2. Procédé selon la revendication 1, **caractérisé en ce que** la couche textile/non-tissé (2) est rapportée sur le côté fleur (4) de la couche de cuir (3) avec une colle (16) susceptible d'être activée par voie thermique, ce pourquoi la couche textile/non-tissé (2) comporte, sur le côté détourné du côté fleur (4), une couche de papier (17) pour la protection de la couche textile/non-tissé (2) lors de l'application de la chaleur qui active la colle (16), ladite couche de papier étant enlevée depuis la couche textile/non-tissé (2) après le collage et avant la pulvérisation du parage (8).

3. Procédé selon l'une des revendications précédentes, **caractérisé en ce que** l'on utilise à titre de couche textile/non-tissé (2) l'une au moins des sortes de fibres suivantes : tissus, tricot, feutre de fibres artificielles, en particulier polyamide ou polyester, fibres naturelles, en particulier coton ou laine, matériau à base de fibres de carbone, en particulier fibres aramides.

4. Procédé selon l'une des revendications précédentes, **caractérisé en ce que** l'on utilise une couche textile/non-tissé (2) qui présente des propriétés conductrices de l'électricité.

5. Procédé selon l'une des revendications précédentes, **caractérisé en ce que** l'on utilise une couche textile/non-tissé (2) et/ou un parage (8) qui présente des propriétés ignifuges.

6. Cuir (1) comportant une couche textile/non-tissé (2), dans lequel le cuir (1) comporte la structure en couches suivantes :
couche de cuir (3) avec un côté fleur (4) ;
couche textile/non-tissé (2) appliquée sur le côté fleur (4) et en particulier collée ;
parage (8) appliqué sur la couche textile/non-tissé (2), qui traverse le cas échéant partiellement la couche textile/non-tissé (2),
**caractérisé en ce que**
pour une qualité plus faible du côté fleur (4), la couche textile/non-tissé (2) est prévue avec un poids surfacique plus élevé.

7. Cuir (1) selon la revendication 6, **caractérisé en ce que** l'on utilise dans la couche textile/non-tissé (2) l'une au moins des sortes de fibres suivantes : tissus, tricot, feutre en fibres artificielles, en particulier polyamide ou polyester, fibres naturelles, en particulier coton ou laine, matériau à base de fibres de carbone, en particuliers fibres aramides.

8. Cuir (1) selon l'une des revendications précédentes 6 ou 7, **caractérisé en ce que** la couche textile/non-tissé (2) présente des propriétés conductrices de l'électricité.

9. Cuir (1) selon la revendication 8, **caractérisé en ce que** des fibres conductrices de l'électricité, en particulier des fils chauffants (10) sont intégrées par tissage dans la couche textile/non-tissé (2).

10. Cuir (1) selon la revendication 9, **caractérisé en ce qu'**il est prévu des contacts (11, 12) reliés aux fibres conductrices de l'électricité, au niveau desquels un courant peut être appliqué dans les fibres, en particulier pour faire chauffer les fils chauffants (10).

11. Cuir (1) selon l'une des revendications précédentes 6 à 10, **caractérisé en ce que** la couche textile/non-tissé (2) et/ou le parage (8) présente des propriétés ignifuges.

12. Cuir (1) selon l'une des revendications 6 à 11, **caractérisé en ce que** la couche textile/non-tissé (2) présente un poids surfacique de moins de 40 g/m², et en particulier entre 6 et 10 g/m².

13. Siège, en particulier siège de véhicule, comprenant un chauffage de siège, **caractérisé en ce que** le siège est habillé d'un cuir selon l'une des revendications 8 à 10.
